# EUROPEAN PATENT APPLICATION

(11) **EP 2 042 524 A1**
(43) Date of publication of application: **01.04.2009**
(21) Application number: 07790518.0
(22) Date of filing: 09.07.2007
(51) Int. Cl.: C08F 8/30, C08G 85/00

(54) **HYDRAZINE STORAGE RESIN**

(30) Priority: 14.07.2006 JP 2006194432
(71) Applicant: Otsuka Chemical Co., Ltd., Osaka-shi, Osaka 540-0021 (JP); Sanyo Chemical Industries, Ltd., Kyoto-shi, Kyoto 605-0995 (JP); Daihatsu Motor Co., Ltd., Ikeda-shi, Osaka 563-8651 (JP)
(72) Inventor: TANIGUCHI, Masatoshi, Osaka-shi Osaka 540-0021 (JP); OKA, Akinori, Tokushima-shi Tokushima 771-0193 (JP); KITAJIMA, Takashi, Tokushima-shi Tokushima 771-0193 (JP); SONOGI, Ken, Tokushima-shi Tokushima 771-0193 (JP); OKA, Masaaki, Kyoto 605-0995 (JP); TANAKA, Hirohisa, Gamo-gun Shiga 520-2593 (JP); YAMADA, Koji, Gamo-gun Shiga 520-2593 (JP); ASAZAWA, Koichiro, Gamo-gun Shiga 520-2593 (JP)
(74) Representative: Schwabe - Sandmair - Marx
(86) International application number: PCT/JP2007/063697
(87) International publication number: WO 2008/007650

(57) **Abstract**

A hydrazine-fixing group such as a ketone group, a formyl group, a chlormethyl group or an amide group, which is capable of releasably fixing hydrazine, is introduced into a side chain of a synthetic resin, and hydrazine is fixed to the hydrazine-fixing group. Since a hydrazine storage resin of the present invention has a hydrazine-releasable group capable of releasing hydrazine, it is able to store hydrazine stably. In addition, hydrazine can be supplied by releasing hydrazine from the hydrazine-releasable group. Consequently, the hydrazine storage resin can be widely used in various industrial fields requiring supply of hydrazine.

## Description

### TECHNICAL FIELD

The present invention relates to a hydrazine storage resin, and specifically, to a hydrazine storage resin used in various industrial fields requiring a supply of hydrazine. More specifically, the present invention relates to a hydrazine storage resin capable of stably storing hydrazine in solid form, but not in liquid form, and of supplying it in the form of liquid hydrazine hydrate when required.

### BACKGROUND ART

Hydrazine has been used in a wide range of industrial fields for applications such as raw materials for the production of plastic foaming agents, boiler compounds, reducing agents, polymerization catalysts and various derivatives, reagents, agricultural chemicals, water treatment chemicals, and rocket fuels.

However, when hydrazine is heated, exposed to flame, or allowed to react with oxidizing agents, it may pose a fire or explosion hazard. Moreover, hydrazine vigorously reacts with metals, metal oxides, or porous substances, which may also cause a fire or an explosion. Further, hydrazine is strongly alkaline and irritative to skin and membrane. Therefore, hydrazine should always be handled with extreme caution.

It has been proposed, for example, to store hydrazine by enclosing a hydrazine standard solution in an ampule less transparent to ultraviolet light (cf. for example, Patent Document 1).
Patent Document 1: Japanese Unexamined Patent Publication No. 9-21731

### DISCLOSURE OF THE INVENTION

### PROBLEMS TO BE SOLVED

However, the method for storing the hydrazine standard solution described in Patent Document 1 is intended to store hydrazine standard solutions used for test and analysis, and enclosing of hydrazine in an ampule is completely unsuitable for applications in other industrial fields such as storage as an industrial source.

Further, although hydrazine usually exists as monohydrate and is widely used for industrial purposes, hydrazine hydrates, other than hydrazine salt, are used, stored, and delivered in a liquid form or as an aqueous solution.

It is an object of the present invention to provide a hydrazine storage resin capable of stably storing and supplying hydrazine.

### MEANS FOR SOLVING THE PROBLEM

To achieve the above object, the hydrazine storage resin of the present invention has a hydrazine-releasable group capable of releasing hydrazine.

In the hydrazine storage resin of the present invention, it is preferable that the hydrazine-releasable group is at least one kind selected from the group consisting of a hydrazone group, a hydrazide group, a hydrazino group, and an azine group.

In the hydrazine storage resin of the present invention, it is preferable that the hydrazine-releasable group is formed by fixing hydrazine to a hydrazine-fixing group which releasably fixes hydrazine, and, it is preferable that the hydrazine-fixing group is at least one kind selected from the group consisting of a ketone group, a formyl group, an acetal group, a halogenomethyl group, a halogenoalkyl group, an amide group, an ester group.

The hydrazine storage resin of the present invention may have a hydrazine-releasable group in a main chain thereof, or it is preferable that the hydrazine storage resin has the hydrazine-releasable group in a side chain branched from the main chain.

In the hydrazine storage resin of the present invention, it is preferable that the main chain is at least one kind selected from the group consisting of hydrocarbon, vinyl polymer, polyacrylamide, polyacrylic acid, polyacrylate, polymethacrylic acid, polymethacrylate, polyvinyl alcohol, polyester, polyamide, polyimide, polyetherimide, polyether, polyketone resin, polyether ketone, polythioether, polycarbonate, polysulfonic acid, epoxy resin, liquid crystal polymer, fluorine resin, and silicon resin, including an aliphatic group and/or an aromatic group, and/or a heterocyclic group, and/or any combination thereof.

It is preferable that the hydrazine storage resin of the present invention is a hydrophilic resin, and that the hydrophilic resin is a copolymer with a hydrophilic monomer, or has a hydrophilic group in a side chain branched from the main chain. Further, it is preferable that the hydrophilic group is at least one kind selected from the group consisting of a hydroxyl group, a carboxyl group, a sulfonic acid group, a sulfinic acid group, a sulfonic acid group, a phosphoric acid group, and an amide group.

### EFFECT OF THE INVENTION

The hydrazine storage resin of the present invention has a hydrazine-releasable group capable of releasing hydrazine, so that hydrazine can be stably stored and delivered as a solid material. Further, hydrazine hydrates or aqueous hydrazine solutions can be supplied by releasing hydrazine from the hydrazine storage resin. Thus, the hydrazine storage resin can be widely used in various industrial fields requiring a supply of hydrazine.

### EMBODIMENT OF THE INVENTION

The hydrazine storage resin of the present invention is a synthetic resin (synthetic polymer) or a natural product, and has a hydrazine-releasable group capable of releasing hydrazine.

In the present invention, the hydrazine-releasable group is not particularly limited as long as it releasably contains hydrazine, and examples thereof include hydrazone group (C=N-NH₂), hydrazide group (-CONH-NH₂), hydrazino group (C-NH-NH₂), and azine group (-C=N-N=C-).

The hydrazine-releasable group is not particularly limited thereto, and is formed, for example, by fixing hydrazine to a hydrazine-fixing group which releasably fixes hydrazine.

The hydrazine-fixing group is not particularly limited as long as it can fix hydrazine, and examples thereof include ketone group, formyl group, acetal group, halogenomethyl group, halogenoalkyl group, amide group, ester group, sulfonyl chloride group, amidino group, and quaternary ammonium group.

The hydrazine-releasable group can be formed by adding, for example, hydrazine hydrate to the hydrazine-fixing group and stirring the mixture with the hydrazine hydrate dispersed or dissolved in a solvent. Hydrazine is released from the hydrazine-releasable group (hydrazine-fixing group), for example, by adding an alkaline aqueous solution or water and stirring the mixture.

The synthetic resin (hydrazine-fixing resin) which constitutes a hydrazine storage resin is not particularly limited as long as the above-mentioned hydrazine-fixing group is introduced thereinto, and examples thereof include those having a hydrazine-fixing group initially introduced in a synthetic resin by synthesizing a homopolymer or a copolymer containing a monomer having the hydrazine-fixing group (a hydrazine fixing group-containing monomer), or those having a hydrazine-fixing group introduced later in the existing synthetic resin by subjecting to post-treatment. Such hydrazine storage resin has a hydrazine-releasable group introduced in the main chain or a side chain branched from the main chain.

Examples of the hydrazine-fixing resin having a hydrazine-fixing group initially introduced in the synthetic resin (the former resin) include polyketone resin, polyether ketone resin, polyether ether ketone resin, polythioether ketone, and resin having a carbonyl group, a formyl group, a chloromethyl group, a halogenomethyl group, an amide group, and an ester group in the main chain structure when a cyclic alkyl, an aromatic, or a heterocyclic group constitutes the main chain.

Moreover, examples of the former resin include hydrocarbon (carbon-carbon bond) polymers (polyolefine (polyethylene, polypropylene, etc.), polystyrene, polyacrylamide, polyvinyl chloride, polyvinyl acetate, acrylic resin, ABS resin, and ionomer) in the main chain, obtained by radical homopolymerization or radical copolymerization of a hydrazine fixing group-containing vinyl monomer (e.g., acrolein, methyl vinyl ketone, ethyl vinyl ketone, hexyl vinyl ketone, p-acetyl alkyleneoxy styrene, acrylamide, acrylate, methacrylate, p-sulfonated styrene, p-chloromethylated styrene, p-alkyloxycarbonyl styrene, etc.).

Examples of the former resin also include polyester polymers, polyurethane polymers, polyamide polymers, polyamidoimide polymers, and polyimide polymers in the main chain, obtained by condensation polymerization, polycondensation, polyaddition, or addition condensation of a hydrazine fixing group-containing compound having a functional group (e.g., hydrazine fixing group-containing polyhydric alcohols such as acetylethyl ethylene glycol, acetylethyl ethylene diamine, acetylethyl ethylene dicarboxylic acid, acetylethyl ethylene dichloride, etc.) and a reactive functional group-containing compound having a reactive functional group capable of reacting with the functional group.

Examples of the hydrazine-fixing resin having a hydrazine-fixing group introduced later in the existing synthetic resin (the latter resin) include polymers obtained by introducing a hydrazine-fixing group such as a ketone group, a halogenomethyl group, a haloalkyl group, a formyl group, or an ester group into an aromatic ring, a fused aromatic ring, a heterocyclic ring, or an aromatic ring fused with a heterocyclic ring, among those having the aromatic ring (e.g., polyphenylene oxide, polyphenylene sulfide, polysulfone, polyethersulfone, polyether ketone, polyether ether ketone, polyallyl sulfone, liquid crystal polymer, etc.).

In the present invention, the hydrazine storage resin is preferably a hydrophilic resin because hydrazine is hydrophilic. The hydrazine storage resin is rendered hydrophilic resin, for example, by introducing a hydrophilic unit such as polyoxyethylene into the main chain, or by introducing a hydrophilic group into a side chain branched from the main chain. In view of the freedom of polymer design, the hydrazine storage resin having a hydrophilic group introduced into the side chain is preferable. Examples of the hydrophilic group include hydroxyl group, carboxyl group, sulfonic acid group, sulfinic acid group, sulfenic acid group, phosphoric acid group, amide group, and quaternary ammonium group.

Examples of the method of introducing a hydrophilic group into a side chain branched from the main chain include copolymerizing a hydrophilic vinyl monomer (described later) in the above-mentioned radical copolymerization, or saponifying polyvinyl acetate. Examples thereof also include, in the above-mentioned condensation polymerization or the like, simultaneously making the compound (e.g., dimethylol propionic acid, etc.) having a reactive functional group and a hydrophilic group together to react.

Next, the hydrazine storage resin of the present invention will now be described in more detail corresponding to the kind of the above-mentioned main chain.

### (1) Hydrocarbon-Based Hydrazine Storage Resin

A hydrocarbon-based hydrazine storage resin can be obtained in the following manner. First, a hydrazine fixing group-containing vinyl monomer is homopolymerized, or a hydrazine fixing group-containing vinyl monomer and a copolymerizable vinyl monomer copolymerizable with the hydrazine fixing group-containing vinyl monomer are copolymerized, to synthesize a hydrocarbon-based hydrazine fixing resin. Then, hydrazine is fixed to the hydrocarbon-based hydrazine fixing resin, to thereby obtain the hydrocarbon-based hydrazine storage resin. As the copolymerizable vinyl monomer copolymerized with the hydrazine fixing group-containing vinyl monomer, a crosslinking vinyl monomer to be described later can be used to control the hydrophilicity of the hydrocarbon-based hydrazine storage resin as a crosslinking agent and to impart mechanical strength to the hydrocarbon-based hydrazine storage resin. (1-1) Synthesis of Hydrocarbon-Based Hydrazine-Fixing Resin

The hydrazine fixing group-containing vinyl monomer is a monomer having both a hydrazine-fixing group and a vinyl group, and includes, for example, acrolein, methyl vinyl ketone, ethyl vinyl ketone, hexyl vinyl ketone, p-acetyl methyl styrene, p-acetyl styrene, methyl acrylate, p-chloromethyl styrene, o-acetyl methyl vinyl alcohol, o-acetyl methyl allyl alcohol, and N-acetyl methyl vinyl pyridine. These hydrazine fixing group-containing vinyl monomers can be used alone or in combination of two or more kinds.

The copolymerizable vinyl monomer is not particularly limited as long as it has a vinyl group and is copolymerizable with a hydrazine fixing group-containing vinyl monomer, and examples thereof include styrene and derivatives thereof, such as styrene, o-methylstyrene, m-methylstyrene, p-methylstyrene, α-methylstyrene, p-chlorostyrene, 3,4-dichlorostyrene, p-phenylstyrene, p-ethylstyrene, 2,4-dimethylstyrene, p-tert-butylstyrene, p-n-hexylstyrene, p-n-octylstyrene, p-n-nonylstyrene, p-n-decylstyrene, and p-n-dodecylstyrene; (meth)acrylate derivatives such as methyl (meth)acrylate, ethyl (meth)acrylate, isopropyl (meth)acrylate, n-butyl (meth)acrylate, t-butyl (meth)acrylate, isobutyl (meth)acrylate, n-octyl (meth)acrylate, 2-ethylhexyl (meth)acrylate, stearyl (meth)acrylate, lauryl (meth)acrylate, and phenyl (meth)acrylate; olefins such as ethylene, propylene, and isobutylene; halogen-containing vinyl monomers such as vinyl chloride, vinylidene chloride, vinyl bromide, vinyl fluoride, and vinylidene fluoride; vinyl esters such as vinyl propionate, vinyl acetate, and vinyl benzoate; vinyl ethers such as methyl vinyl ether and ethyl vinyl ether; N-vinyl compounds such as N-vinyl carbazole, N-vinyl indole, and N-vinyl pyrrolidone; aromatic vinyl monomers such as vinylnaphthalene and vinylpyridine; and acrylic acid and derivatives thereof, such as acrylonitrile, methacrylonitrile, and acrylamide. These copolymerizable vinyl monomers can be used alone or in combination of two or more kinds.

As described above, it is preferable that a hydrophilic vinyl monomer is copolymerized as the copolymerizable vinyl monomer to impart hydrophilicity to the hydrocarbon-based hydrazine storage resin (hydrocarbon-based hydrazine fixing resin).

The hydrophilic vinyl monomer is a monomer having both an ionic dissociation group such as carboxyl group, sulfonic acid group, sulfinic acid group, sulfenic acid group, and phosphoric acid group, and vinyl group. The hydrophilic vinyl monomer includes, for example, acrylic acid, methacrylic acid, maleic acid, itaconic acid, cinnamic acid, fumaric acid, maleic acid monoalkyl ester, itaconic acid monoalkyl ester, styrene sulfonic acid, allyl sulfosuccinic acid, 2-acrylamido-2-methylpropanesulfonic acid, acid phosphoxyethyl metacrylate, and 3-chloro-2-acid phosphoxypropyl metacrylate. These hydrophilic vinyl monomers can be used alone or in combination of two or more kinds.

Further, as the copolymerizable vinyl monomer, a crosslinking vinyl monomer can also be copolymerized to impart mechanical strength to the hydrocarbon-based hydrazine storage resin (hydrocarbon-based hydrazine fixing resin).

The crosslinking vinyl monomer is a monomer having a plurality of vinyl groups, and includes, for example, divinylbenzene, N,N'-methylene-bis(meth)acrylamide, ethyleneglycol di(meth)acrylate, polyethylene glycol di(meth)acrylate, propyleneglycol di(meth)acrylate, glycerin (di- or tri-)acrylate, trimethylolpropane triacrylate, neopentylglycol di(meth) methacrylate, triallylamine, triallyl cyanurate, triallyl isocyanurate, tetraaryloxy ethane, and pentaerythritol triallyl ether. These crosslinking vinyl monomers can be used alone or in combination of two or more kinds.

The hydrocarbon-based hydrazine fixing resin can be obtained by mixing a hydrazine fixing group-containing vinyl monomer as an essential component, and, if necessary, mixing a copolymerizable vinyl monomer, or preferably a hydrophilic vinyl monomer and/or a crosslinking vinyl monomer, as an optional component, and performing radical polymerization thereof.

The amount of the copolymerizable vinyl monomer (the hydrophilic vinyl monomer or the crosslinking vinyl monomer) mixed with the hydrazine fixing group-containing vinyl monomer is appropriately selected according to the amount of hydrazine supplied or physical properties required for hydrazine, and for example, the equivalent ratio of the copolymerizable vinyl monomer to the fixing group in the hydrazine-fixing group-containing vinyl monomer is 1:0.01-100, preferably 1:0.1-10, or more preferably 1:0.5-2. More specifically, the equivalent ratio of the hydrophilic vinyl monomer to the fixing group in the vinyl polymer is 1: 0.01-100, preferably 1:0.1-10, or more preferably 1:0.5-2. The amount of the crosslinking vinyl monomer is in the range of, for example, 0.1 to 100 parts by weight, or preferably 1 to 10 parts by weight, per 100 parts by weight of the total of the hydrazine fixing group-containing vinyl polymer and the hydrophilic vinyl monomer.

The radical polymerization is not particularly limited, and can be performed, for example, by adding a radical polymerization initiator and using a known method such as aqueous solution polymerization method or reverse phase suspension polymerization method.

The radical polymerization initiator is not particularly limited, and includes, for example, azo-based polymerization initiators such as 2,2'-azobis-(2,4-dimethylvaleronitrile), 2,2'-azobis(isobutyronitrile), 1,1'-azobis(cyclohexane-1-carbonitrile), 2,2'-azobis-4-methoxy-2,4-dimethylvaleronitrile, azobis (isobutyronitrile), and 2,2'-azobis (2-amidinopropane); peroxide-based polymerization initiators such as benzoyl peroxide, methyl ethyl ketone peroxide, diisopropylperoxy carbonate, cumene hydroperoxide, t-butyl hydroperoxide, di-t-butyl peroxide, dicumyl peroxide, 2,4-dichlorobenzoyl peroxide, lauroyl peroxide, 2,2-bis-(4,4-t-butylperoxycyclohexyl)propane, and tris-(t-butylperoxy)triazine; persulfate such as potassium persulfate and ammonium persulfate; and redox-based initiators by combining hydrogen peroxide and reducing agents (ascorbic acid, etc.).

In the radical polymerization, the reaction temperature is not particularly limited as long as it is higher than the radical formation temperature of the above-mentioned radical polymerization initiator, and is in the range of, for example, -10 to 200°C, or preferably 10 to 100°C. The use of a redox-based initiator, however, enables polymerization at approximately room temperature.

### (1-2) Fixation of Hydrazine to Hydrocarbon-Based Hydrazine Fixing Resin

Hydrazine is fixed to the hydrocarbon-based hydrazine fixing resin obtained above in the following manner. An appropriate amount (preferably an equivalent amount or more) of hydrazine hydrate is added to a fixing group (a ketone group) in the hydrocarbon-based hydrazine fixing resin, and the mixture is stirred, for example, at a temperature from room temperature to 100°C for 10 minutes to 48 hours. Subsequently, if necessary, the resulting mixture is washed with a proper solvent (e.g., alcohols, etc.), filtered, and then dried, so that a hydrocarbon-based hydrazine storage resin having hydrazine fixed to the fixing group (the ketone group) is obtained.

### (1-3) Release of Hydrazine From Hydrocarbon-Based Hydrazine Storage Resin

The hydrazine is released from the hydrocarbon-based hydrazine storage resin obtained above, for example, by dispersing the hydrocarbon-based hydrazine storage resin in water or an alkaline aqueous solution (e.g., an aqueous NaOH solution, an aqueous KOH solution, etc.), so that the hydrazine fixed to the hydrocarbon-based hydrazine storage resin is released.

After the release of the hydrazine, the hydrocarbon-based hydrazine storage resin allows the hydrazine to be fixed again by the above method. That is, the fixation and the release of hydrazine can be repeated.

### (2) Polyacrylamide-Based and Polyacrylate-Based Hydrazine Storage Resin

A polyacrylamide-based and a polyacrylate-based hydrazine storage resin can be obtained by first radically polymerizing acrylamide to synthesize polyacrylamide, and then fixing hydrazine to the polyacrylamide.

A polyacrylate-based (polymethacrylate-based) hydrazine storage resin can also be obtained by first radically polymerizing acrylate (methacrylate) to synthesize polyacrylate (polymethacrylate), and then allowing hydrazine to react with the polyacrylate, so that the hydrazine is fixed thereto as a polyacrylic hydrazide.

### (2-1) Synthesis of Polyacrylamide-Based and Polyacrylate-Based Hydrazine Fixing Resin

A polyacrylamide-based hydrazine fixing resin is obtained in the following manner. An acrylamide is mixed with water to prepare an aqueous acrylamide solution, and a radical polymerization initiator is then added to the aqueous acrylamide solution to radically polymerize the acrylamide, so that a polyacrylamide is obtained.

The radical polymerization is not particularly limited and can be performed in the same manner as above. Further, as a radical polymerization initiator, for example, a peroxide-based polymerization initiator such as benzoyl peroxide and hydrogen peroxide, or an azo-based polymerization initiator such as 2,2'-azobis(isobutyronitrile) and 2,2'-azobis-2-methylbutyronitrile is used.

Thereafter, for example, alcohol is added to the polyacrylamide to form a precipitate, and the precipitate is isolated by filtration, so that a polyacrylamide-based hydrazine fixing resin is obtained.

A polyacrylate-based hydrazine fixing resin is obtained by adding a radical polymerization initiator such as AIBN to acrylate to polymerize the acrylate.

### (2-2) Fixation of Hydrazine to Polyacrylamide-Based and Polyacrylate-Based Hydrazine Fixing Resin

Hydrazine is fixed to the polyacrylamide-based hydrazine fixing resin obtained above in the following manner. An appropriate amount (preferably an equivalent amount or more) of hydrazine hydrate is added to a fixing group (an amide group) in the polyacrylamide-based hydrazine fixing resin, and the mixture is stirred in the same manner as above. Subsequently, if necessary, the resulting mixture is washed with a proper solvent (e.g., alcohols, etc.), filtered, and then dried, so that a polyacrylamide-based hydrazine storage resin (polyacrylic hydrazide) having hydrazine fixed to the fixing group (the amide group) is obtained.

Further, hydrazine is fixed to the polyacrylate-based hydrazine fixing resin obtained above in the following manner. The polyacrylate-based hydrazine fixing resin is finely pulverized or dissolved in a solvent, and an equivalent amount or more of hydrazine hydrate is added to a fixing group (ester group) in the polyacrylate-based hydrazine fixing resin, and the mixture is stirred in the same manner as above. Subsequently, if necessary, the solvent is distilled off or supplied into large quantities of poor solvents, and the resulting mixture is washed with a proper solvent (e.g., alcohols, etc.), filtered, and then dried, so that a polyacrylate-based hydrazine storage resin (polyacrylic hydrazide) having hydrazine fixed to the fixing group (ester group) is obtained.

### (2-3) Release of Hydrazine From Polyacrylamide-Based and Polyacrylate-Based Hydrazine Storage Resin

The hydrazine is released from the polyacrylic hydrazide-based hydrazine storage resin obtained above, for example, by dispersing the polyacrylamide-based and polyacrylate-based hydrazine storage resin (polyacrylic hydrazide-based hydrazine storage resin) in an alkaline aqueous solution (e.g., an aqueous NaOH solution, an aqueous KOH solution, etc.), so that the hydrazine fixed to the polyacrylamide-based and polyacrylate-based hydrazine storage resin is released.

### (3) Polyvinyl Alcohol-Based Hydrazine Storage Resin

A polyvinyl alcohol-based hydrazine storage resin can be obtained in the following manner. First, a hydrazine fixing group-containing vinyl monomer and vinyl acetate are copolymerized to synthesize a hydrazine fixing group-containing polyvinyl acetate copolymer, and then the synthesized product is saponified, so that a polyvinyl alcohol-based hydrazine fixing resin copolymer is formed. Thereafter, hydrazine is fixed to the polyvinyl alcohol-based hydrazine fixing resin, to thereby obtain a polyvinyl alcohol-based hydrazine storage resin.

### (3-1) Synthesis of Polyvinyl Alcohol-Based Hydrazine Fixing Resin

The hydrazine fixing group-containing vinyl monomer is a monomer having both a hydrazine-fixing group and a vinyl group, and includes, for example, alkyl or aryl vinyl ketone such as methyl vinyl ketone and ethyl vinyl ketone; p-acetyl alkyleneoxy styrene such as p-acetyl methyleneoxy styrene and p-acetyl ethyleneoxy styrene; and p-chloromethyl styrene. These hydrazine fixing group-containing vinyl monomers can be used alone or in combination of two or more kinds.

The copolymerization of the hydrazine fixing group-containing vinyl monomer and the vinyl acetate is performed by mixing them with a proper solvent (e. g. , alcohols), and then adding a radical polymerization initiator thereto to perform radical polymerization.

The radical polymerization is not particularly limited and can be performed in the same manner as above. As the radical polymerization initiator, for example, an azo-based polymerization initiator or a peroxide-based polymerization initiator is used.

Thereafter, for example, a polymerization terminator (e.g., nitrobenzene, etc.) is added thereto to terminate the polymerization. Thereafter, an unreacted monomer is distilled off with adding alcohols to form a precipitate in water, and the precipitate is isolated by filtration to obtain a hydrazine fixing group-containing polyvinyl acetate.

Subsequently, the hydrazine fixing group-containing polyvinyl acetate is mixed with a solvent (e.g., alcohols). Then, an alkali (e.g., an aqueous NaOH solution, an aqueous KOH solution, etc.) is added and saponified, to form a precipitate in water again. The precipitate is isolated and dried, so that a polyvinyl alcohol-based hydrazine fixing resin is obtained.

### (3-2) Fixation of Hydrazine to Polyvinyl Alcohol-Based Hydrazine Fixing Resin

Hydrazine is fixed to the polyvinyl alcohol-based hydrazine fixing resin obtained above in the following manner. An appropriate amount (preferably an equivalent amount or more) of hydrazine hydrate is added to a fixing group (a ketone group, a halogeno group, a formyl group, an amide group, an ester group, etc.) in the polyvinyl alcohol-based hydrazine fixing resin, and the mixture is stirred in the same manner as above. Subsequently, if necessary, the resulting mixture is washed with a proper solvent (e.g., alcohols, etc.), filtered, and then dried, so that a polyvinyl alcohol-based hydrazine storage resin having hydrazine fixed to the fixing group (the ketone group, the halogeno group, the formyl group, the amide group, the ester group, etc.) is obtained.

### (3-3) Release of Hydrazine From Polyvinyl Alcohol-Based Hydrazine Storage Resin

The hydrazine is released from the polyvinyl alcohol-based hydrazine storage resin obtained above, for example, by dispersing the polyvinyl alcohol-based hydrazine storage resin in water or an alkaline aqueous solution (e.g., an aqueous NaOH solution, an aqueous KOH solution, etc.), so that the hydrazine fixed to the polyvinyl alcohol-based hydrazine storage resin is released.

### (4) Polyester-Based Hydrazine Storage Resin

A polyester-based hydrazine storage resin can be obtained by first performing condensation polymerization of a hydrazine fixing group-containing polyhydric alcohol and a polybasic acid to synthesize a polyester-based hydrazine fixing resin, and then fixing hydrazine to the polyester-based hydrazine fixing resin.

Either the polyhydric alcohol or the polybasic acid contains a hydrazine-fixing group, or both of them may contain a hydrazine-fixing group.

### (4-1) Synthesis of Polyester-Based Hydrazine Fixing Resin

The hydrazine fixing group-containing polyhydric alcohol is a polyhydric alcohol having both a hydrazine-fixing group and at least two hydroxyl groups, and includes, for example, acetylethyl ethylene glycol. If necessary, for example, an ordinary polyhydric alcohol such as ethylene glycol, propylene glycol, butylene glycol, and neopentyl glycol, can also be used together.

The polybasic acid has at least two carboxylic acids, and includes, for example, aromatic polybasic acid such as orthophthalic acid, isophthalic acid, terephthalic acid, and trimellitic acid; and aliphatic polybasic acid such as adipic acid, azelaic acid, and sebacic acid.

The polyester-based hydrazine fixing resin can be obtained by mixing the hydrazine fixing group-containing polyhydric alcohol and the polybasic acid as essential components, and, if necessary, mixing an ordinary polyhydric alcohol as an optional component, and performing condensation polymerization.

Moreover, when the polybasic acid contains a hydrazine-fixing group and when both the polyhydric alcohol and the polybasic acid contain a hydrazine-fixing group, the polyester-based hydrazine fixing resin can be obtained in the same manner as above.

The polyhydric alcohol and the polybasic acid may be mixed in nearly equivalent amounts, and a known organic metal catalyst is added during the condensation polymerization. The reaction can be performed at a temperature in the range of, for example, 30 to 300°C, or preferably 50 to 250°C, and in the case of poor stability of the material, the reaction is preferably performed under reduced pressure, for example, at 0.1 to 10 mmHg.

### (4-2) Fixation of Hydrazine to Polyester-Based Hydrazine Fixing Resin

Hydrazine is fixed to the polyester-based hydrazine fixing resin obtained above in the following manner. An appropriate amount (preferably an equivalent amount or more) of hydrazine hydrate is added to a fixing group (a ketone group, a halogeno group, a formyl group, an amide group, an ester group, etc.) in the polyester-based hydrazine fixing resin, and the mixture is stirred in the same manner as above. Subsequently, if necessary, the resulting mixture is washed with a proper solvent (e.g., alcohols, etc.), filtered, and then dried, so that a polyester-based hydrazine storage resin having hydrazine fixed to the fixing group (the ketone group, the halogeno group, the formyl group, the amide group, the ester group, etc.) is obtained.

### (4-3) Release of Hydrazine From Polyester-Based Hydrazine Storage Resin

The hydrazine is released from the polyester-based hydrazine storage resin obtained above, for example, by dispersing the polyester-based hydrazine storage resin in water or an alkaline aqueous solution (e. g. , an aqueous NaOH solution, an aqueous KOH solution, etc.), so that the hydrazine fixed to the polyester-based hydrazine storage resin is released.

### (5) Polyamide-Based Hydrazine Storage Resin

A polyamide-based hydrazine storage resin can be obtained in the following manner. First, aliphatic polyamide is synthesized by performing condensation polymerization of aliphatic polyvalent amine and aliphatic polybasic acid (in this case, either or both of polyvalent amine and polybasic acid need to contain a hydrazine-fixing group), an aromatic ring-containing polyamide is synthesized by performing condensation polymerization of aromatic polyvalent amine and aliphatic polybasic acid, an aromatic ring-containing polyamide is synthesized by performing condensation polymerization of aliphatic polyvalent amine and aromatic polybasic acid, or an aromatic ring-containing polyamide is synthesized by performing condensation polymerization of aromatic polyvalent amine and aromatic polybasic acid. Then, the aromatic ring of the aromatic ring-containing polyamide is halogenomethylated or a hydrazine-fixing group is introduced later into the synthesized product, so that a polyamide-based hydrazine fixing resin is obtained.

Thereafter, 1) hydrazine is directly introduced into the halogenomethyl group, or the halogenomethyl group is acetylethylated and then hydrazine is fixed, to thereby obtain a polyamide-based hydrazine storage resin. Alternatively, a ketone compound having an active hydrogen such as methyl alkyl ketone, methyl allyl ketone, or methyl aralkyl ketone is allowed to react, so that a ketone group can be introduced into the side chain. Further, halogenoacetone, halogenomethyl alkyl ketone, halogenoallyl ketone, or halogenoaralkyl ketone directly reacts with the aromatic ring, so that a ketone group can also be introduced into the side chain.

### 2) Hydrazine is fixed as is to the polyamide-based hydrazine storage resin having a hydrazine fixing group, to thereby obtain a polyamide-based hydrazine storage resin.

### (5-1) Synthesis of Polyamide-Based Hydrazine Fixing Resin

The aliphatic polyvalent amine has at least two amino groups, and includes, for example, ethylenediamine, hexamethylenediamine, and cyclohexanediamine.

The aromatic polyvalent amine has at least two amino groups in the aromatic ring, and includes, for example, aromatic diamine such as meta-xylylene diamine, para-xylylene diamine, phenylene diamine, diaminodiphenyl ether, and diaminodiphenyl methane.

The polybasic acid has at least two carboxylic acids, and includes, for example, aliphatic dicarboxylic acid such as adipic acid, suberic acid, azelaic acid, sebacic acid, dodecanedioic acid, hexahydroterephthalic acid and hexahydroisophthalic acid; and aromatic dicarboxylic acid such as terephthalic acid, isophthalic acid, 2-methylterephthalic acid, 5-methylisophthalic acid, and 2,6-naphthalene dicarboxylic acid.

The condensation polymerization of the aromatic polyvalent amine and the polybasic acid can be performed by mixing them in nearly equivalent amounts, and if necessary, reducing pressure under an inert gas atmosphere to allow the mixture to react. The reaction temperature is in the range of, for example, 30 to 400°C, or preferably 70 to 300°C. Thus, an aromatic ring-containing polyamide is obtained.

Subsequently, the aromatic ring-containing polyamide is dissolved in a proper solvent (e.g., N-methylpyrrolidone), and formaldehyde and hydrochloric acid, hydrobromic acid, or hydroiodic acid are then added thereto to introduce the halogenomethyl group into the aromatic ring of the aromatic ring-containing polyamide. Thereafter, a precipitate is formed in a proper solvent (e.g., alcohols), so that a polyamide-based hydrazine fixing resin is obtained.

### (5-2) Fixation of Hydrazine to Polyamide-Based Hydrazine Fixing Resin

1) The polyamide-based hydrazine fixing resin is dissolved in a proper solvent (e.g., N-methylpyrrolidone), and an equivalent amount or more of acetone is then added to the halogenomethyl group. An alkali (e.g., an aqueous NaOH solution, an aqueous KOH solution, etc.) is further added thereto and stirred. This converts the halogenomethyl group to an acetylethyl group. Then, an equivalent amount or more of hydrazine hydrate is added to a fixing group (a ketone group) in the polyamide-based hydrazine fixing resin, and the mixture is stirred in the same manner as above. Subsequently, if necessary, the resulting mixture is washed with a proper solvent (e.g., alcohols, etc.), filtered, and then dried, so that a polyamide-based hydrazine storage resin having hydrazine fixed to the fixing group (the ketone group) is obtained.

The same reaction procedures are performed when mono-halogenoacetone, mono-halogenomethyl alkyl ketone, mono-halogenomethyl allyl ketone, or mono-halogenomethyl aralkyl ketone is allowed to react. Compounds having a ketone group such as methyl alkyl ketone, methyl allyl ketone, and methyl aralkyl ketone, as well as acetone, and an active hydrogen group can also be used for this purpose.
2) Alternatively, an appropriate amount (preferably an equivalent amount or more) of hydrazine hydrate with respect to a halogenomethyl group or the like in the polyamide-based hydrazine fixing resin is added as is to the polyamide-based hydrazine fixing resin, and the mixture is stirred in the same manner as above. Subsequently, if necessary, the resulting mixture is washed with a proper solvent (e.g., alcohols, etc.), filtered, and then dried, so that a polyamide-based hydrazine storage resin having hydrazine fixed, in which the hydrazine-releasable group is a hydrazinomethyl group, is obtained.
3) As for the aliphatic polyamide, after the aliphatic polyamide is formed, it is dissolved in an organic solvent to react with mono-halogenomethyl alkyl ketone such as mono-halogenoacetone and mono-halogenomethyl ethyl ketone, mono-halogenoallyl ketone, or mono-halogenoaralkyl ketone. This reaction causes a ketone group such as an acetyl methyl group to be introduced into the side chain, although the reaction position in the side chain (the ketone group) containing a hydrazine-fixing group cannot be specified. An equivalent amount or more of hydrazine hydrate and the hydrazine-fixing group (the ketone group) are allowed to react, and after the reaction, the resulting product is supplied into a proper solvent (e.g., alcohols), washed, filtered, and then dried, so that an aliphatic polyamide-based hydrazine storage resin having hydrazine fixed as hydrazone is obtained

### (5-3) Release of Hydrazine From Polyamide-Based Hydrazine Storage Resin

The hydrazine is released from the polyamide-based hydrazine storage resin obtained above, for example, by dispersing the polyamide-based hydrazine storage resin in water or an alkaline aqueous solution (e.g., an aqueous NaOH solution, an aqueous KOH solution, etc.), so that the hydrazine fixed to the polyamide-based hydrazine storage resin is released.

### (6) Polyether-Based Hydrazine Storage Resin

A polyether-based hydrazine storage resin is obtained in the following manner. First, a phenolic derivative is polymerized in the presence of a copper catalyst and a base to synthesize an aromatic ring-containing polyether. Then, the aromatic ring of the aromatic ring-containing polyether is halogenomethylated, so that a polyether-based hydrazine fixing resin is obtained.

Thereafter, 1) the halogenomethyl group is allowed to react with acetone, methyl alkyl ketone, methyl allyl ketone, methyl aralkyl ketone or the like to convert the halogenomethyl group, for example, to an acetylethyl group. Thereafter, hydrazine is fixed thereto, to thereby obtain a polyether-based hydrazine storage resin.
2) Alternatively, hydrazine is fixed as is to the polyether-based hydrazine fixing resin, to thereby obtain a polyether-based hydrazine storage resin.

### (6-1) Synthesis of Polyether-Based Hydrazine Fixing Resin

The phenolic derivative is a derivative of phenol, and includes, for example, 2,6-dimethylphenol and 2,6-diphenylphenol.

The polymerization of the phenolic derivative is performed in the following manner. If necessary, the phenolic derivative is dissolved in a solvent such as nitrobenzene, for example, a copper catalyst such as copper(I) chloride and copper(II) chloride, and a base such as pyridine are added thereto, and oxygen is brought thereinto with stirring to allow the mixture to react. The reaction temperature is in the range of, for example, 50 to 400°C, or preferably 60 to 200°C. Thereafter, the resulting product is washed with a proper solvent (chloroform or methanol) and dried under reduced pressure to obtain an aromatic ring-containing polyether.

Subsequently, the aromatic ring-containing polyether is dissolved in a proper solvent (e.g., chloroform), and formaldehyde and hydrochloric acid, hydrobromic acid, or hydroiodic acid are then added thereto to introduce the halogenomethyl group into the aromatic ring of the aromatic ring-containing polyether. Thereafter, filtration is performed, so that a polyether-based hydrazine fixing resin is obtained.

### (6-2) Fixation of Hydrazine to Polyether-Based Hydrazine Fixing Resin

1) After the polyether-based hydrazine fixing resin is dissolved in a proper solvent (e.g., chloroform), an equivalent amount or more of acetone is added to the halogenomethyl group, and an alkali (e.g., an aqueous NaOH solution, an aqueous KOH solution, etc.) is further added thereto and stirred. This converts the halogenomethyl group into an acetylethyl group. Further, a ketone group such as acetyl methyl group can also be introduced into the side chain by making mono-chloroacetone, mono-chloromethyl alkyl ketone, mono-chloromethyl allyl ketone, or mono-chloromethyl aralkyl ketone to react. Then, an appropriate amount (preferably an equivalent amount or more) of hydrazine hydrate is added to a fixing group (a ketone group) in the polyether-based hydrazine fixing resin, and the mixture is stirred in the same manner as above. Subsequently, if necessary, the resulting mixture is washed with a proper solvent (e.g., alcohols, etc.), filtered, and then dried, so that a polyether-based hydrazine storage resin having hydrazine fixed to the fixing group (the ketone group) is obtained.
2) Alternatively, an equivalent amount or more of hydrazine hydrate is added as is to the halogenomethyl group in the polyether-based hydrazine fixing resin, and the mixture is stirred in the same manner as above. Subsequently, if necessary, the resulting mixture is washed with a proper solvent (e.g., alcohols, etc.), filtered, and then dried, so that a polyether-based hydrazine storage resin having hydrazine fixed, in which the hydrazine-releasable group is a hydrazinomethyl group, is obtained.

### (6-3) Release of Hydrazine From Polyether-Based Hydrazine Storage Resin

The hydrazine is released from the polyether-based hydrazine storage resin obtained above, for example, by dispersing the polyether-based hydrazine storage resin in water or an alkaline aqueous solution (e. g. , an aqueous NaOH solution, an aqueous KOH solution, etc.), so that the hydrazine fixed to the polyether-based hydrazine storage resin is released.

### (7) Polyether Ketone-Based Hydrazine Storage Resin

A polyether ketone-based hydrazine storage resin can be obtained by first polymerizing dihalogeno benzophenone and diphenol in the presence of alkali to synthesize a polyether ketone-based hydrazine fixing resin, and then fixing hydrazine to the polyether ketone-based hydrazine fixing resin.

### (7-1) Synthesis of Polyether Ketone-Based Hydrazine Fixing Resin

Examples of the dihalogeno benzophenone include 4,4'-dihalo benzophenone, 2,4'-dihalo benzophenone, bis-1,4-(4-halobenzoil) benzene, bis-1,3-(4-halobenzoil) benzene, bis-4,4'-(4-halobenzoil) biphenyl, bis-4,4'-(4-halobenzoil) diphenyl ether.

Examples of the diphenol include hydroquinone, 4,4'-dihydroxybiphenyl, 4,4'-dihydroxybenzophenone, bis(4-hydroxyphenyl) methane, 2,2-bis (4-hydroxyphenyl) propane, 4,4'-dihydroxydiphenyl ether, 4,4'-dihydroxydiphenyl sulfide, and 4,4'-dihydroxydiphenyl sulfone.

The polyether ketone-based hydrazine fixing resin can be obtained by polymerizing dihalogeno benzophenone and diphenol in the presence of alkali.

Examples of the alkali include carbonates of alkali metal, carbonates of alkaline earth metal, bicarbonates of alkali metal, and hydroxides of alkali metal.

The dihalogeno benzophenone and the diphenol may be mixed in nearly equivalent amounts, and a known catalyst and a known solvent are added during the polymerization. The reaction temperature is in the range of, for example, 10 to 300°C, or preferably 50 to 200°C.

Examples of the catalyst include metal oxides, metal halides, and metal salts, and examples of the metal include copper and chromium. The catalyst also includes phyllosillicates such as silica.

Examples of the solvent include aliphatic sulfones such as dimethyl sulfone, diethyl sulfone, and sulfolane; aromatic sulfones such as diphenyl sulfone, ditolyl sulfone, methylphenyl sulfone, dibenzothiophene oxide, phenoxathiin dioxide, and 4-phenylsulfonyl biphenyl; and aromatic ketones such as benzophenone, isophthalophenone, terephthalophenone, 4-benzoyldiphenylether, fluorenone, xanthone, and thioxanthone.

### (7-2) Fixation of Hydrazine to Polyether Ketone-Based Hydrazine Fixing Resin

Hydrazine is fixed to the polyether ketone-based hydrazine fixing resin obtained above in the following manner. After the polyether ketone-based hydrazine fixing resin is dispersed in, for example, an aprotic polar solvent such as dimethyl sulfoxide, an appropriate amount (preferably an equivalent amount or more) of hydrazine hydrate is added to a fixing group (a ketone group) in the polyether ketone-based hydrazine fixing resin, and the mixture is stirred in the same manner as above. Subsequently, if necessary, the resulting mixture is washed with a proper solvent (e.g., acetone, etc.), filtered, and then dried, so that a polyether ketone-based hydrazine storage resin having hydrazine fixed to the fixing group (the ketone group) is obtained.

Further, in order to introduce a ketone group into the side chain, a halogenomethylated reaction is performed, acetone, methyl alkyl ketone, methyl allyl ketone, or methyl aralkyl ketone is allowed to react therewith, and for example, an acetylethyl group is introduced thereinto, or mono-halogenomethyl alkyl ketone such as mono-chloroacetone, mono-halogenomethyl allyl ketone, or mono-halogenoaralkyl ketone is allowed to react therewith, and for example, an acetyl methyl group is introduced thereinto, so that a polyether ketone-based hydrazine storage resin also having hydrazine introduced into the ketone group can be obtained.

### (7-3) Release of Hydrazine From Polyether Ketone-Based Hydrazine Storage Resin

The hydrazine is released from the polyether ketone-based hydrazine storage resin obtained above, for example, by dispersing the polyether ketone-based hydrazine storage resin in water or an alkaline aqueous solution (e.g., an aqueous NaOH solution, an aqueous KOH solution, etc.), so that the hydrazine fixed to the polyether ketone-based hydrazine storage resin is released.

### (8) Polythioether-Based Hydrazine Storage Resin

A polythioether-based hydrazine storage resin is obtained in the following manner. First, dihalogenobenzene and sodium sulfide are allowed to react to synthesize an aromatic ring-containing polythioether, and then, the aromatic ring of the aromatic ring-containing polythioether is halogenomethylated, to thereby obtain a polythioether-based hydrazine fixing resin.

Thereafter, 1) the halogenomethyl group is allowed to react with, for example, acetone to convert the halogenomethyl group to an acetylethyl group. Thereafter, hydrazine is fixed thereto, to thereby obtain a polythioether-based hydrazine storage resin.
2) Alternatively, hydrazine is fixed as is to the polythioether-based hydrazine fixing resin, to thereby obtain a polythioether-based hydrazine storage resin.

### (8-1) Synthesis of Polythioether-Based Hydrazine Fixing Resin

Examples of the dichlorobenzene include p-dichlorobenzene.

The reaction of the dihalogenobenzene and the sodium sulfide is performed in the following manner. First, the sodium sulfide is dissolved in a polar solvent such as N-methylpyrrolidone, and the mixture is heated to decompose the sodium sulfide into hydrogen sulfide. Subsequently, the dihalogenobenzene is added thereto to allow the mixture to react. The reaction temperature is in the range of, for example, 5 to 200°C, or preferably 25 to 150°C. Thereafter, the resulting product is washed with a proper solvent (e.g., alcohols) and dried to obtain an aromatic ring-containing polythioether.

Subsequently, the aromatic ring-containing polythioether is dissolved in a proper solvent (e.g., dimethyl sulfoxide), and formaldehyde and hydrochloric acid, hydrobromic acid, or hydroiodic acid are then added thereto to introduce the halogenomethyl group into the aromatic ring of the aromatic ring-containing polythioether. Thereafter, filtration is performed, so that a polythioether-based hydrazine fixing resin is obtained.

### (8-2) Fixation of Hydrazine to Polythioether-Based Hydrazine Fixing Resin

1) After the polythioether-based hydrazine fixing resin is dissolved in a proper solvent (e.g., dimethyl sulfoxide), an equivalent amount or more of acetone, methyl alkyl ketone, methyl allyl ketone, or methyl aralkyl ketone is added to the halogenomethyl group, and an alkali (e.g., an aqueous NaOH solution, an aqueous KOH solution, etc.) are further added thereto and stirred. This converts the halogenomethyl group to an acetylethyl group. Then, an appropriate amount (preferably an equivalent amount or more) of hydrazine hydrate is added to a fixing group (a ketone group) in the polythioether-based hydrazine fixing resin, and the mixture is stirred in the same manner as above. Subsequently, if necessary, the resulting mixture is washed with a proper solvent (e.g., alcohols, etc.), filtered, and then dried, so that a polythioether-based hydrazine storage resin having hydrazine fixed to the fixing group (the ketone group) is obtained.
2) Alternatively, an equivalent or more of hydrazine hydrate with respect to a halogenomethyl group in the polythioether-based hydrazine fixing resin is added as is to the polythioether-based hydrazine fixing resin, and the mixture is stirred in the same manner as above. Subsequently, if necessary, the stirred mixture is washed with a proper solvent (e.g., alcohols, etc.), filtered, and then dried, thereby obtaining a polythioether-based hydrazine storage resin in which the hydrazine-releasable group is a hydrazinomethyl group and hydrazine is fixed.

### (8-3) Release of Hydrazine From Polythioether-Based Hydrazine Storage Resin

The hydrazine is released from the polythioether-based hydrazine storage resin obtained above, for example, by dispersing the polythioether-based hydrazine storage resin in water or an alkaline aqueous solution (e.g., an aqueous NaOH solution, an aqueous KOH solution, etc.), so that the hydrazine fixed to the polythioether-based hydrazine storage resin is released.

### EXAMPLES

While in the following, the present invention is described in further detail with reference to Examples, the present invention is not limited to any of them by no means.

### Example 1 (Hydrocarbon-Based Amide Crosslinking Hydrazine Storage Resin (Fixing Group: Ketone Group))

### 1) Synthesis of Hydrocarbon-Based Amide Crosslinking Hydrazine Fixing Resin

An amount 20 g of methyl vinyl ketone, 59 g of sodium p-styrene sulfonate, 2. 3 g of N,N'-methylene-bis-acrylamide as a crosslinking agent, and 79 g of ion exchange water were uniformly mixed to prepare an aqueous polymerization solution, and the aqueous polymerization solution was supplied into a polymerization tank. The dissolved oxygen content in the aqueous polymerization solution was set to 0.2 ppm by introduction of nitrogen gas into the aqueous polymerization solution, and the solution temperature was set to 5°C.

To this aqueous polymerization solution, 10 g of 0.1% hydrogen peroxide, 5 g of a 0.1% aqueous ascorbic acid solution, and 2.3 g of V-50 (azo-based polymerization initiator, manufactured by Wako Pure Chemical Industries, Ltd.) were added. After approximately 20 minutes, a temperature rise indicating initiation of polymerization was confirmed. Subsequently, the temperature was increased to 65°C, and the polymerization was continued at the temperature for approximately 8 hours, to obtain a hydrated gel-like polymer.

The hydrated gel-like polymer thus obtained was pulverized into small pieces using a meat chopper, and the resulting small pieces of the hydrated gel polymer were through air dried under the conditions of a supply air temperature of 120°C and an air velocity of 1.5 m/sec for 70 minutes using a aeration-type hot air dryer (manufactured by Inoue Kinzoku Kogyo Co., Lid.), to obtain a dried product having a moisture content of approximately 4%.

The dried product was pulverized with a mixer for household use and sieved off to collect a portion of the pulverized material which passed through a 22-mesh wire net (710 µm in diameter) but not through a 100-mesh wire net (125 µm in diameter), so that a hydrophilic hydrazine fixing resin (hydrocarbon-based amide crosslinking hydrazine fixing resin (fixing group: ketone group)) was obtained.

The absorption magnification of the hydrophilic hydrazine fixing resin was 9 times its mass. The absorption magnification was obtained in the following manner. One gram of the hydrophilic hydrazine fixing resin was placed in a tea bag (20 cm long and 10 cm wide) made of a 250 mesh nylon net. The bag was immersed in physiological saline (an aqueous ion exchange solution containing 0.90% NaCl) for 60 minutes. Thereafter, the bag was hung up for 15 minutes to drain water. Residual water was then removed by centrifugal drying, and the bag was measured for the increased mass.

### 2) Fixation of Hydrazine to Hydrocarbon-Based Amide Crosslinking Hydrazine Fixing Resin

To the hydrophilic hydrazine fixing resin obtained in step 1) above was added a 100% hydrazine hydrate containing hydrazine in twice the molar amount of the ketone group contained in 2 g of the resin, and the mixture was stirred for 60 minutes, so that the hydrazine was fixed to the hydrophilic hydrazine fixing resin, thereby obtaining a hydrophilic hydrazine storage resin.

After completion of the reaction, 40 ml of isopropyl alcohol was added thereto, and the mixture was stirred for 1 hour, filtered, and washed. The hydrophilic hydrazine storage resin was then isolated by filtration and dried under reduced pressure. The content of hydrazine in the isopropyl alcohol filtrate was quantified by HPLC (high-performance liquid chromatography). As a result, the content of free hydrazine was 45.9%. That is, the content of fixed hydrazine was 54.1%. This corresponds to a hydrazine adsorption ratio of 108.2% based on the initial content of the ketone group in the resin.

### 3) Release of Hydrazine From Hydrocarbon-Based Amide Crosslinking Hydrazine Storage Resin

### 3-1) Release With Alkali

An amount 0.8 g of the hydrophilic hydrazine storage resin obtained in step 2) above was dispersed and stirred in a 1 N aqueous KOH solution at room temperature. The content of hydrazine in the 1 N aqueous KOH solution was quantified by HPLC. As a result, the content of the hydrazine was 72.1%. 3-2) Re-fixation

To the hydrophilic hydrazine fixing resin from which the hydrazine was released in step 3-1) above was added a 100% hydrazine hydrate containing hydrazine in twice the molar amount of the ketone group contained in 0.6 g of the resin, and the mixture was stirred for 60 minutes, so that the hydrazine was fixed to the hydrophilic hydrazine fixing resin, thereby obtaining a hydrophilic hydrazine storage resin again.

After completion of the reaction, 40 ml of isopropyl alcohol was added thereto, and the mixture was stirred for 1 hour, filtered, and washed. The hydrophilic hydrazine storage resin was then isolated by filtration and dried under reduced pressure. The content of hydrazine in the isopropyl alcohol filtrate was quantified by HPLC. As a result, the content of free hydrazine was 64.8%. That is, the content of fixed hydrazine was 50.8% based on the content of the ketone group. This corresponds to 70.4% as the hydrazine conversion ratio relative to the residual ketone group before the re-fixation. 3-3) Release with Water

An amount 0.8 g of the hydrophilic hydrazine storage resin obtained in step 2) above was dispersed and stirred in water at room temperature. The content of hydrazine in water was quantified by HPLC. The result confirmed that 72.8% of the fixed hydrazine was released. This corresponds to 78.8% as the hydrazine conversion ratio relative to the initial ketone group.

### Example 2(Hydrocarbon-Based Amide Crosslinking Hydrazine Storage Resin (Fixing Group: Ketone Group))

### 1) Fixation of Hydrazine to Hydrocarbon-Based Amide Crosslinking Hydrazine Fixing Resin

To the hydrophilic hydrazine fixing resin obtained in step 1) of Example 1 was added hydrazine in an equimolar amount to the ketone group contained in the resin, and the same procedures as in step 2) of Example 1 were performed. The result showed that the content of hydrazine in the isopropyl alcohol filtrate was 13.9%. That is, the content of the fixed hydrazine was 86.1%. This corresponds to a hydrazine adsorption ratio of 86.1% based on the initial content of the ketone group in the resin.

### 2) Release of Hydrazine From Hydrocarbon-Based Amide Crosslinking Hydrazine Storage Resin

An amount 0.8 g of the hydrophilic hydrazine storage resin obtained in step 1) above was dispersed and stirred in a 1 N aqueous KOH solution at room temperature. The content of hydrazine in the 1 N aqueous KOH solution was quantified by HPLC. As a result, the content of the hydrazine was 18.8%. This corresponds to 21.8% of the released hydrazine based on the initial content of the ketone group.

### Example 3 (Hydrocarbon-Based Ether Crosslinking Hydrazine Storage Resin)

### 1) Synthesis of Hydrocarbon-Based Ether Crosslinking Hydrazine Fixing Resin

A hydrophilic hydrazine fixing resin (hydrocarbon-based ether crosslinking hydrazine fixing resin) was obtained by the same procedures as in step 1) of Example 1, except that pentaerythritol triallyl ether was used in place of N,N'-methylene-bis-acrylamide.

The absorption magnification of the hydrophilic hydrazine fixing resin was 0.1 times its mass.

### 2) Fixation of Hydrazine to Hydrocarbon-Based Ether Crosslinking Hydrazine Fixing Resin

To the hydrophilic hydrazine fixing resin obtained in step 1) above was added a 100% hydrazine hydrate containing hydrazine in an equimolar amount to the ketone group contained in 2 g of the resin, and the mixture was stirred for 60 minutes, so that the hydrazine was fixed to the hydrophilic hydrazine fixing resin, thereby obtaining a hydrophilic hydrazine storage resin.

After completion of the reaction, the reaction product was washed with 40 ml of isopropyl alcohol. The hydrophilic hydrazine storage resin was then isolated by filtration and dried under reduced pressure. The content of hydrazine in the isopropyl alcohol filtrate was quantified by HPLC. As a result, the content of free hydrazine was 13.0%. That is, the content of fixed hydrazine was 87.0%.

### 3) Release of Hydrazine From Hydrocarbon-Based Ether Crosslinking Hydrazine Storage Resin

An amount 0.8 g of the hydrophilic hydrazine storage resin obtained in step 2) above was dispersed and stirred in a 1 N aqueous KOH solution at room temperature for 60 minutes. Subsequently, after 40 ml of methanol was added thereto to gelate the hydrophilic hydrazine storage resin. The gelated hydrophilic hydrazine storage resin was then isolated by filtration, and the content of hydrazine in the alcohol filtrate was quantified by HPLC. The result confirmed that 19.4% of the fixed hydrazine was released. This corresponds to 22.3% of the hydrazine conversion ratio relative to the initial ketone group.

### Example 4 (Hydrocarbon-Based Amide Crosslinking Hydrazine Storage Resin (Fixing Group: Aldehyde Group))

An amount 16 g of acrolein, 59 g of sodium p-styrene sulfonate, 2.3 g of N,N'-methylene-bis-acrylamide as a crosslinking agent, and 79 g of ion exchange water were uniformly mixed to prepare an aqueous polymerization solution, and the aqueous polymerization solution was supplied into a polymerization tank. The dissolved oxygen content in the aqueous polymerization solution was set to 0.2 ppm by introduction of nitrogen gas into the aqueous polymerization solution, and the solution temperature was set to 5°C.

To this aqueous polymerization solution, 10 g of 0.1% hydrogen peroxide, 5 g of a 0.1% aqueous ascorbic acid solution, and 2.3 g of V-50 (azo-based polymerization initiator, manufactured by Wako Pure Chemical Industries, Ltd.) were added. After approximately 20 minutes, a temperature rise indicating initiation of polymerization was confirmed. Subsequently, the temperature was increased to 65°C, and the polymerization was continued at the temperature for approximately 8 hours, to obtain a hydrophilic hydrazine fixing resin made of water-soluble polymers (a hydrocarbon-based amide crosslinking hydrazine fixing resin (fixing group: aldehyde group)).

An 60% hydrazine hydrate aqueous solution in a molar amount equivalent to the aldehyde group contained in the hydrophilic hydrazine fixing resin thus obtained was added and stirred for 30 minutes, so that hydrazine was fixed to the hydrophilic hydrazine fixing resin, thereby obtaining a hydrophilic hydrazine storage resin. To this reaction solution was added 100 g of methanol and stirred to solidify the hydrophilic hydrazine storage resin. The solidified hydrophilic hydrazine storage resin was isolated by filtration, and dried under reduced pressure. Although the content of hydrazine in the methanol filtrate was quantified by iodometry, free hydrazine was not detectable. That is, all of the hydrazine was fixed.

Then, water was added to the hydrophilic hydrazine storage resin thus isolated and dried, and the mixture was stirred. The hydrophilic hydrazine storage resin was separated using a molecular sieve membrane which allows molecules having a molecular weight of 1000 or less to pass through. As a result of quantifying the amount of the filtrate by HPLC, free hydrazine was detected in an amount equivalent to 97.7% of the hydrazine fixed as hydrazone.

### Example 5 (Acrylamide-Based Hydrazine Storage Resin)

Ten grams of acrylamide and 25.9 ml of water were mixed to prepare an aqueous acrylamide solution. Thereto was added 4.1 g of a 35% hydrogen peroxide and stirred at 85 to 90°C for 16 hours. The reaction solution was injected into a 10-fold amount of methanol to form a white precipitate, and the precipitate was isolated by filtration. Thereafter, the precipitate was dried to obtain polyacrylamide (average molecular weight: 22,000).

Ten grams of the polyacrylamide thus obtained and 17 ml of water were mixed to prepare an aqueous polyacrylamide solution. Thereto was added 21.12 g of a 100% hydrazine hydrate and stirred at 80 to 85°C for 15 hours. The reaction solution was injected into a 10-fold amount of methanol to form a white precipitate. The precipitate was isolated by filtration and dried to obtain a polyacrylic hydrazide (acrylamide-based hydrazine storage resin). The polyacrylic hydrazide thus obtained had an average molecular weight of 23,000 and a hydrazide conversion ratio of 82%.

This polyacrylic hydrazide was dissolved in a 1 N aqueous KOH solution in an amount equal to or more than the molar amount of the polyacrylic hydrazide. This hydrolyzed hydrazide to release the hydrazine hydrate. Thereafter, as a result of HPLC analysis, free hydrazine in an amount equivalent to 14.7% of the hydrazine fixed as hydrazide was detected. The polyacrylic hydrazide was converted to a potassium polyacrylate.

### Example 6 (Vinyl Alcohol-Based Hydrazine Storage Resin)

A 500 ml-three-neck flask was equipped with a stirrer, a capacitor, and a thermometer, and charged with 86 g of vinyl acetate, 152 g of p-acetyl methyleneoxy styrene, and 50 ml of methanol. The hot-water bath temperature was increased to 60 to 63°C, with stirring the content.

When the mixture solution was boiled in the flask and reflux was confirmed, 0.10 g of AIBN (azobisisobutyronitrile, manufactured by Otsuka Chemical Co., Ltd.) preliminarily dissolved in 10 g of methanol was added. The mixture was immediately foamed to initiate polymerization. The polymerization was continued as is for 5 hours, and a small amount of dinitrobenzene (polymerization terminator) was added to terminate the polymerization.

Subsequently, heating was continued while methanol was added dropwise, so that an unreacted monomer was distilled off. The solution containing polymers was injected into large quantities of water to form a precipitate of the polymers. The precipitate was then filtered and washed with diluted methanol and water. The resulting solid was dissolved in methanol, and a 1N aqueous KOH solution was added dropwise to the solution. The mixture was fully stirred to be saponified and then removed as potassium acetate. The solution containing the saponified polymer was injected into large quantities of iced water to isolate the polymer (solid).

The isolated polymer was dried under reduced pressure. Thereto was added a 60% hydrazine hydrate in a molar amount equivalent to the p-acetyl methyleneoxy styrene that was assumed to have completely reacted, and the mixture was stirred for 5 hours. The reaction solution was washed with methanol, filtered, and dried under reduced pressure, so that a vinyl alcohol-based hydrazine storage resin was obtained. The content of hydrazine hydrate in the filtrate was quantified by iodometry. The result confirmed that 43.8% of the stoichiometrical amount of the ketone group contained in the vinyl alcohol-based hydrazine storage resin was fixed as hydrazone.

A 1N KOH was added to the vinyl alcohol-based hydrazine storage resin and stirred. Subsequently, as a result of iodometry, free hydrazine was detected in an amount equivalent to 88.1% of the fixed hydrazine.

### Example 7 (Polyester-Based Hydrazine Storage Resin)

A 500 ml-three-neck flask equipped with a rectifying column was charged with 75.5 g of terephthalic acid, 101.6 g of acetylethyl ethylene glycol, 0.075 g of titanate tetra-n-butylester, and 0.03 g of butyl hydroxytinoxide.

The mixture was fully stirred to generate water. The water thus generated was distilled off while maintaining the temperature at 220 to 250°C, and the reaction mixture was esterified until it became transparent. The resulting product and 0.02 g of titanate tetra-n-butylester were charged into an autoclave, mixed, and heated at 250°C under reduced pressure (1 mmHg) for 2 hours. The resulting condensate was dissolved in hexamethylphosphoramide (HMPA), and supplied into large quantities of water under strong stirring, so that the condensate was precipitated. The condensate was then filtered off, washed with methanol, and dried under reduced pressure.

To the condensate was added a 60% hydrazine hydrate in an equimolar amount to the ketone group (stoichiometrical amount) and stirring was performed a whole day. Methanol was added thereto and the condensate was filtered off. The condensate was further washed with methanol, and dried under reduced pressure, so that a polyester-based hydrazine storage resin was obtained. The content of hydrazine hydrate in the methanol filtrate was quantified by iodometry. As a result, the content of free hydrazine hydrate was 72.8%. That is, the content of fixed hydrazine hydrate was 27.2%.

This polyester-based hydrazine storage resin was dispersed in a 1 N aqueous KOH solution and stirred for 1 hour. Subsequently, the polyester-based hydrazine storage resin was filtered off, and the hydrazine in the filtrate was titrated by iodometry. As a result, free hydrazine in an amount equivalent to 80.5% of the fixed hydrazine was detected.

### Example 8 (Polyamide-Based Hydrazine Storage Resin-1)

A test tube equipped with a nitrogen introducing tube and a cock for reducing pressure was charged with 9.91 g of 4,4'-diaminodiphenyl methane and 10.62 g of sebacic acid, and the mixture was heated to 285°C under a nitrogen gas stream to be melted. Then, the reaction system was decompressed to approximately 1.33 kPa and allowed to react for 1 hour. Then, the reaction system was again cooled to room temperature at normal pressure under a nitrogen gas stream. Subsequently, the test tube was broken and the obtained polyamide was pulverized with a pulverizer. The pulverized powder was dissolved in N-methylpyrrolidone and washed with water. When the resulting solution was supplied into large quantities of methanol, a condensate powder was precipitated out. This condensate was dissolved in N-methylpyrrolidone, and formalin in twice the molar amount equivalent to the condensate and hydrochloric acid were added and stirred for 5 hours (thus, two chloromethyl groups were introduced into the 4,4'-diaminodiphenyl methane) . This reaction product was supplied into large quantities of methanol, to obtain a chloromethylated condensate powder.

This condensate was dissolved in N-methylpyrrolidone, acetone was added in an excessive amount relative to the 4,4'-diaminodiphenyl methane, and a 1 N aqueous KOH solution in twice the molar amount equivalent to the 4 and 4'-diaminodiphenyl methane was further added dropwise under stirring. After completion of the reaction, the reaction solution was supplied into large quantities of methanol, to obtain a condensate powder. In this condensate, an average of one acetylethyl group was introduced into the aromatic ring of the aromatic ring-containing -aliphatic polyamide.

A 60% hydrazine hydrate in a molar amount equivalent to the carbonyl group was added to the condensate powder and stirred for 2 hours. The resulting mixture was then supplied into methanol. This forms a powdery precipitate having a hydrazone group. This solid was filtered off and dried under reduced pressure, to obtain a polyamide-based hydrazine storage resin.

### Example 9 (Polyamide-Based Hydrazine Storage Resin-2)

A chloromethylated condensate powder was obtained by the same procedures as in Example 8. Thereafter, a 60% hydrazine hydrate in an equimolar amount to the chloromethyl group in the condensate was added and stirred for 2 hours. The resulting mixture was then supplied into methanol, to form a precipitate having a hydrazinomethyl group (polyamide-based hydrazine storage resin). The content of the precipitate was quantified by iodometry, and the hydrazino group was confirmed in an amount equivalent to 76.8% of the stoichiometrically calculated amount thereof.

### Example 10 (Polyether-Based Hydrazine Storage Resin-1)

A 500 ml-three-neck flask equipped with a stirrer, an oxygen introducing tube, and a thermometer was placed in a water bath at 30°C, and 200 ml of nitrobenzene, 70 ml of pyridine, and 1g of copper(I) chloride were added thereto. Oxygen was brought thereinto with vigorously stirring, and 15 g of 2,6-dimethylphenol was added. When the temperature was increased to 33°C, the reaction mixture obtained viscousness. The reaction was further continued for 12 minutes, and thereafter, the reaction mixture was diluted with 100 ml of chloroform and supplied into 1.1 L of methanol containing 3 ml of concentrated hydrochloric acid. The precipitated condensate was filtered off and washed with 250 ml of methanol, 250 ml of methanol containing 10 ml of concentrated hydrochloric acid, and 250 ml of methanol, in this order. The condensate was further dissolved in 500 ml of chloroform, and supplied into 1.2 L of methanol containing 3 ml of concentrated hydrochloric acid to form a precipitate again. The resulting condensate was washed with methanol and then dried under reduced pressure at 110°C for 3 hours. Thus, polyphenylene ether was obtained. The yield of polyphenylene ether was 91% and the average molecular weight thereof was 28000.

Ten grams of the polyphenylene ether was dissolved in 100 ml of chloroform. Then, formalin in 4 times the molar equivalent amount of the aromatic ring in the polyphenylene ether was added thereto under stirring, and concentrated hydrochloric acid was then added dropwise. The mixture was further stirred for 2 hours, and then supplied into large quantities of methanol. This precipitated a solid (polymer) in which the aromatic ring of the polyphenylene ether was chloromethylated.

The solid was filtered off, washed with methanol, and then dried under reduced pressure. The resulting solid was dissolved in chloroform, and caustic soda and acetone in 4 times the molar amount of the aromatic ring in the polymer were added thereto and stirred for 2 hours. The reaction solution was supplied into large quantities of methanol, to obtain a solid having an acetylethyl group introduced in the aromatic ring of the polymer. The solid was filtered off, and then dried under reduced pressure. A 60% hydrazine hydrate in an amount equivalent to the stoichiometrical amount for the above reaction was added to the solid and the mixture was stirred for 3 hours. Subsequently, the mixture was washed with methanol and filtered. The solid thus filtered was dried under reduced pressure, so that a polyether-based hydrazine storage resin was obtained. The content of hydrazine in the methanol filtrate was quantified by iodometry. As a result, the content of fixed hydrazine was 51.5%.

### Example 11 (Polyether-Based Hydrazine Storage Resin-2)

A chloromethylated solid (polymer) was obtained by the same procedures as in Example 10. Thereafter, a 60% hydrazine hydrate in 4 times the molar equivalent amount of the aromatic ring in the polymer was added and stirred for 3 hours. The resulting mixture was then supplied into methanol, to form a precipitate having a hydrazinomethyl group (polyether-based hydrazine storage resin). The content of the precipitate was quantified by iodometry. The result confirmed a hydrazino group in an amount equivalent to 68.6% of the stoichiometrically calculated amount thereof.

### Example 12 (Polyether Ketone-Based Hydrazine Storage Resin)

A 1 L-stainless steel reaction tube equipped with a stirrer, a nitrogen introducing tube, and an outlet tube was charged with 125 g of 4,4'-dichlorobenzophenone, 59.2 g of fine powder of sodium carbonate, 10 g of silica (Aerosil) as a catalyst, 0.27 g of copper (II) chloride, and 300 g of diphenyl sulfone as a solvent.

The reaction system was replaced by nitrogen, and thereafter, the mixture was heated to 200°C. Again, the atmosphere therein was replaced by nitrogen, and stirring was started. The temperature was increased and the reaction was performed at 280°C for 2 hours, at 300°C for 1 hour, and at 320°C for another 2 hours. A small amount of nitrogen was flown downward during condensation. After completion of the reaction, the cooled and solidified condensate was taken out. This solid (condensate) was pulverized with a mixer, and then washed several times with acetone, 4% caustic soda, and water to remove the solvent and the catalyst. When the resulting solid was dried, powder of aromatic polyether ketone was quantitatively obtained.

Ten grams of the powder was dispersed in 100 ml of dimethyl sulfoxide, and pulverized into fine powder having an average particle size of 300 nm with a ultra high pressure collision pulverizer (a jet mizer, manufactured by Sugino Machine Limited). A 60% hydrazine hydrate in a molar equivalent to the carbonyl group in the condensate obtained from the calculated value was added to the dispersion containing these fine powders, and the mixture was stirred at 100°C a whole day. The condensate was filtered off, washed with acetone and water, and then dried. Thus, a polyether ketone-based hydrazine storage resin was obtained.

Then, a 1 N KOH was added to the polyether ketone-based hydrazine storage resin, and the mixture was stirred at 60°C for 2 hours. Then, as a result of iodometry, free hydrazine was detected in an amount equivalent to 28.9% of the fixed hydrazine.

### Example 13 (Polythioether-Based Hydrazine Storage Resin-1)

An autoclave (internal capacity: 2 L) equipped with a stirrer was charged with 480 g of N-methylpyrrolidone and 2.7 g of sodium sulfide, heated under stirring, and dehydrated until the internal temperature reached 120°C. An amount 79.3 g of a distillate mainly composed of water was distilled off. At this time, 0.069 mol of sodium sulfide was decomposed into hydrogen sulfide and disappeared.

Then, 2.0 mol of p-dichlorobenzene and 150 g of N-methylpyrrolidone were added and stirred over 1 hour while the temperature was increased to 250°C. The reaction was further performed at 250°C for 3 hours, and thereafter, some slurry was sampled and analyzed. The conversion was 100%. An amount 150 g of N-methylpyrrolidone was continuously added, and the mixture was maintained at 250°C under stirring for 15 minutes. Thereafter, the reaction product was cooled to terminate the reaction. The resulting slurry was thoroughly washed with methanol and warm water, then dried at 100°C overnight, to obtain a solid (polyphenylene sulfide). The resulting solid had a particle size of 22 meshes or less.

The polyphenylene sulfide thus obtained was dissolved in dimethyl sulfoxide, formalin in a molar amount equivalent to the molecularity of the aromatic ring contained in the polyphenylene sulfide and hydrochloric acid were added dropwise to perform chloromethylation. The reaction solution was supplied into large quantities of methanol, to obtain a solid. The solid was filtered off, washed with methanol, water, and methanol, and dried under reduced pressure a whole day. The resulting solid was dissolved in dimethyl sulfoxide, and acetone was added in an amount equal to or more than the molar amount of the chloromethyl group. Subsequently, an equimolar amount of aqueous caustic soda solution was added and stirred at 60°C for 5 hours. The reaction solution was then supplied into large quantities of methanol to obtain a solid. The solid was filtered off and thoroughly washed with methanol, water, and methanol. The resulting solid was dried under reduced pressure a whole day. IR and NMR confirmed that the resulting solid was a polymer having an acetylethyl group introduced in the aromatic ring of the polyphenylene sulfide.

This polymer was dissolved in dimethyl sulfoxide, and a 60% hydrazine hydrate in an equimolar amount to the carbonyl group was added and stirred for 10 hours. The separated solid was filtered off, and washed with methanol to obtain a polythioether-based hydrazine storage resin. The content of hydrazine in the methanol filtrate was quantified by iodometry. As a result, the content of fixed hydrazine was 60.3%.

Then, a 1 N KOH was added to the polythioether-based hydrazine storage resin and stirred. Subsequently, iodometry was performed. As a result, free hydrazine was detected in an amount equivalent to 42.9% of the fixed hydrazine.

### Example 14 (Polythioether-Based Hydrazine Storage Resin-2)

A chloromethylated solid was obtained by the same procedures as in Example 13. Thereafter, this solid was dissolved in the dimethyl sulfoxide, and a 60% hydrazine hydrate in an equimolar amount to the chloromethyl group in the solid was added and stirred for 5 hours. The resulting mixture was then supplied into methanol to form a precipitate having a hydrazinomethyl group (polythioether-based hydrazine storage resin). The content of the precipitate was quantified by iodometry. The result confirmed a hydrazino group in an amount equivalent to 58.5% of the stoichiometrically calculated amount thereof.

While the illustrative embodiments of the present invention are provided in the above description, such is for illustrative purpose only and it is not to be construed restrictively. Modification and variation of the present invention that will be obvious to those skilled in the art is to be covered by the following claims.

### INDUSTRIAL APPLICABILITY

As described above, the hydrazine storage resin of the present invention is preferably used in industrial fields employing hydrazine for various applications such as raw materials for the production of plastic foaming agents, boiler compounds, reducing agents, polymerization catalysts and various derivatives, reagents, agricultural chemicals, water treatment chemicals, and rocket fuels.

## Claims

1. A hydrazine storage resin having a hydrazine-releasable group capable of releasing hydrazine.

2. The hydrazine storage resin according to claim 1, wherein
the hydrazine-releasable group capable of releasing hydrazine is formed by fixing hydrazine to a hydrazine-fixing group which releasably fixes hydrazine.

3. The hydrazine storage resin according to claim 1, wherein
the hydrazine-releasable group is at least one kind selected from the group consisting of a hydrazone group, a hydrazide group, a hydrazino group, and an azine group.

4. The hydrazine storage resin according to claim 2, wherein
the hydrazine-fixing group is at least one kind selected from the group consisting of a ketone group, a formyl group, an acetal group, a halogenoalkyl group, an ester group, an amide group, a sulfonyl chloride group, an amidino group, and a quaternary ammonium group.

5. The hydrazine storage resin according to claim 2, wherein
the hydrazine-fixing group is at least one kind selected from the group consisting of a sulfonic acid group, a sulfinic acid group, a sulfenic acid group, a carboxyl group, and a phosphoric acid group.

6. The hydrazine storage resin according to claim 1, having the hydrazine-releasable group in a side chain branched from a main chain thereof.

7. The hydrazine storage resin according to claim 6, wherein
the main chain is at least one kind selected from the group consisting of hydrocarbon, vinyl polymer, polyacrylamide, polyacrylic acid, polyacrylate, polymethacrylic acid, polymethacrylate, polyvinyl alcohol, polyester, polyamide, polyimide, polyetherimide, polyether, polyether ketone, polyketone resin, polythioether, polyethersulfone, polysulfone, polycarbonate, epoxy resin, liquid crystal polymer, fluorine resin, silicon resin, plant-derived polymer, and pectin, comprising an aliphatic group and/or an aromatic group, and/or a heterocyclic group, and/or any combination thereof.

8. The hydrazine storage resin according to claim 1, being a hydrophilic resin.

9. The hydrazine storage resin according to claim 8, wherein hydrophilicity is controlled by a crosslinking agent.

10. The hydrazine storage resin according to claim 7, having a hydrophilic group in a side chain branched from the main chain.

11. The hydrazine storage resin according to claim 10, wherein
the hydrophilic group is at least one kind selected from the group consisting of a hydroxyl group, a carboxyl group, a sulfonic acid group, a phosphoric acid group, and an amide group.
